# EUROPEAN PATENT SPECIFICATION

(11) **EP 2 149 446 B1**
(45) Date of publication and mention of the grant of the patent: **25.03.2015**
(21) Application number: 09166783.2
(22) Date of filing: 29.07.2009
(51) Int. Cl.: B29C 49/36, B29C 49/56, B29C 49/42

(54) **Mould and method for blowing containers**
Form und Verfahren zum Blasformen von Behältern
Moule et procédé de soufflage de conteneurs

(30) Priority: 29.07.2008 IT BO20080474
(43) Date of publication of application: 03.02.2010
(73) Proprietor: SACMI Cooperativa Meccanici Imola Società Cooperativa, 40026 Imola (Bologna) (IT)
(72) Inventor: Borgatti, Maurizio, 40026 Imola (Bologna) (IT); Morovingi, Massimo, 40026 Imola (Bologna) (IT); Parrinello, Fiorenzo, 40059 Medicina (Bologna) (IT); Re, Emilio, 60122 Ancona (IT); Stocchi, Gabriele, 43100 Parma (IT)
(74) Representative: Conti, Marco

(56) References cited:
- EP-A- 1 535 719
- US-A- 4 080 146
- US-A1- 2006 275 525

## Description

This invention relates to a mould for blow-moulding containers and to a process for blow-moulding containers.

In a prior art method for making containers such as plastic bottles, a parison, or preform, is placed inside a mould and a fluid is then blown into the mould under pressure in order to give the container its final shape.

In particular, blow-moulding machines having a carousel with a plurality of moulds are used.

To enable the parison to be placed in the mould and the blow-moulded container to be extracted, the mould normally comprises a first and a second half-mould movable relative to each other between an open and a closed position.

Since the blow-moulding pressure inside the mould may be very high, the half-moulds must be locked in the closed position to prevent them from opening when the fluid is blown in under pressure.

The prior art has developed several technical solutions applicable to the mechanisms used for locking the half-moulds.

In particular, patent document EP1276598 discloses a blow mould in which the half-moulds are hinged so that they can turn between the open position and the closed position.

The locking system comprises a shaft associated with the second half-mould to rotate about an axis parallel with the axis of rotation of the half-moulds from a locked to an unlocked position and vice versa.

The external contour of the shaft is such that when the shaft is in the locked position, a portion of it abuts against a surface of the first half-mould (or of a locking element fixed to the first half-mould) shaped to match the contour of that portion of the shaft, thus preventing the half-moulds from opening.

This solution has the advantage of being very simple but has two drawbacks.

Firstly, the fact that, in the locked position, the outside surface of the shaft must abut against a matching surface of the first half-mould means that, to allow the two half-moulds to be locked without the first half-mould interfering with the shaft, the shaft must be rotated by 180 degrees from the unlocked to the locked position (and vice versa).

That means locking takes more time and reduces the efficacy of the locking system.

Secondly, this solution requires two linkages, one for moving the shaft from the locked to the unlocked position and another for moving the shaft from the unlocked to the locked position.

This involves a complication in the mould and thus reduces its reliability since each of the linkages is liable to breakage.

Document EP1535719A1 regards a device and process for blow-molding containers according to preamble of claims 1 and 12. In particular, it discloses blow molding segments, i.e. half moulds, supported by tool carriers, which are clamped together by one or more locking arms. At least one of the locking arms swivels on the respective tool carrier and has a locking profile matching an opposing profile on an opposing arm, which extends from the other tool carrier towards the first tool carrier.

Therefore, the locking mechanism of EP1535719A1 comprises a hook arranged at the end of a lever hinged on a respective half mould. In the locking position, the hook is inserted into an indentation provided in the other half mould and it is arranged in an advanced position, with respect to the respective axis of rotation, relative to a free end of the respective half-mould.

The aim of this invention is to provide a blow mould and a blow-moulding process that are free of the above mentioned drawbacks.

In particular, it is an aim of this invention to provide a blow mould and a blow-moulding process with a locking system that is at once extremely quick, efficient and simple.

Another aim of the invention is to provide a blow mould and a blow-moulding process with a locking system that is highly reliable.

In accordance with the invention, these aims are achieved by the mould and process comprising the technical characteristics described in claims 1 and 12.

More specifically, a blow mould for making plastic containers from respective parisons comprises:
- a first and a second half-mould hinged to rotate about a longitudinal axis between an open position and a closed position;
- a first fastening element fixed to the first half-mould;
- a second fastening element associated with the second half-mould to rotate about an axis parallel with the longitudinal axis between a half-moulds locked position where it abuts the first fastening element, and a half-moulds unlocked position.

The second fastening element comprises a protrusion which, in the locked position, is operatively inserted in an indentation made in the first fastening element, said protrusion being positioned behind the axis of rotation of the second fastening element relative to the free end of the second half-mould.

Preferably, the half-moulds are shaped in such a way that, in the closed position, the second fastening element is positioned outside the first fastening element. Thus the second fastening element can turn between the unlocked position and the locked position in a rotation direction concordant with the rotation direction of the first half-mould (about the longitudinal axis) from the open to the closed position and comprises a protrusion which, in the locked position, is operatively inserted in an indentation made in the first fastening element. This feature means that the second fastening element turns from the locked position to the unlocked position and vice versa through a very small angle of rotation, typically 10 to 15 degrees.

This makes it advantageously possible to minimize the time required by the locking mechanism defined by the fastening elements to come into operation.

The mould also comprises an elastic element connected to the second half-mould and to the second fastening element to move and normally keep the second fastening element in the locked position.

The presence of the elastic element combined with the fact that the locking element turns from the unlocked to the locked position in a rotation direction concordant with that of the first half-mould towards the second half-mould makes locking automatic. In effect, it is the first fastening element which, as it turns to the closed position, interacts with the second fastening element, moving it first into the unlocked and then, when it has reached the closed position (that is, when the indentation in the first fastening element faces the protrusion on the second fastening element) enabling the second fastening element to return to the locked position under the action of the elastic element.

Advantageously, this further simplifies the locking system because it avoids the use of levers and linkages of any kind to lock the half-moulds to each other.

Further, the protrusion on the second fastening element is shaped in such a way as to afford a contact surface for abutting against the indentation in the first fastening element and positioned in a plane that is substantially radial with respect to the longitudinal axis of rotation of the two half-moulds (that is, a plane passing through the longitudinal axis of rotaton of the half-moulds).

This advantageously provides a fastening reaction against the force exerted by the fluid under pressure tending to move the half-moulds apart.

This reaction does not have any radial components, thus increasing the strength of the mould.

The invention also provides a blow-moulding machine comprising a carousel and a plurality of moulds as described above associated with the carousel.

Locking the two half-moulds comprises turning a protrusion on the second fastening element designed to be inserted in an indentation made in the first fastening element, said protrusion being positioned behind the axis of rotation of the second fastening element relative to the free end of the second half-mould.

Preferably, the half-moulds are shaped in such a way that, in the closed position, the second fastening element is positioned outside the first fastening element. Thus, according to the invention, locking the two half-moulds comprises turning the second fastening element in a rotation direction concordant with the direction in which the first half-mould is closed so as to insert a protrusion formed on the second fastening element into the indentation made in the first fastening element.

This makes locking and unlocking extremely fast, minimizing the angle through which the second fastening element must turn.

The process also comprises a step of preparing an elastic element connected to the second half-mould and to the second fastening element to move and normally keep the second fastening element in the locked position.

The unlocking step comprises turning the second fastening element in the rotation direction in which the first half-mould is opened, against the action of the elastic element.

That makes locking automatic, without the need for actuators and linkages, since it is the first fastening element that interacts with the second fastening element, acting in conjunction with the elastic element to move it.

BRIEF DESCRIPTION OF THE DRAWINGS:

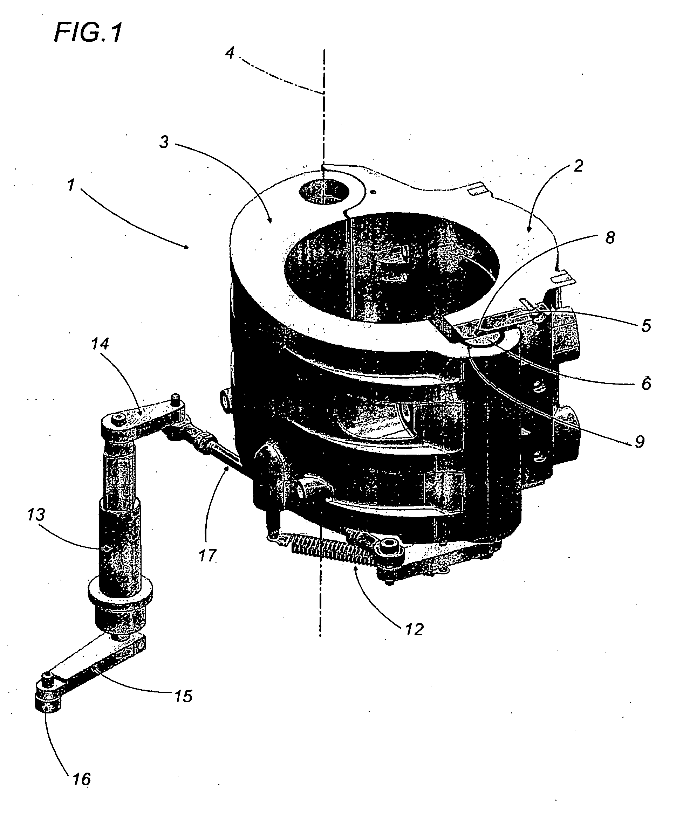

- Figure 1 illustrates a mould in a perspective view;

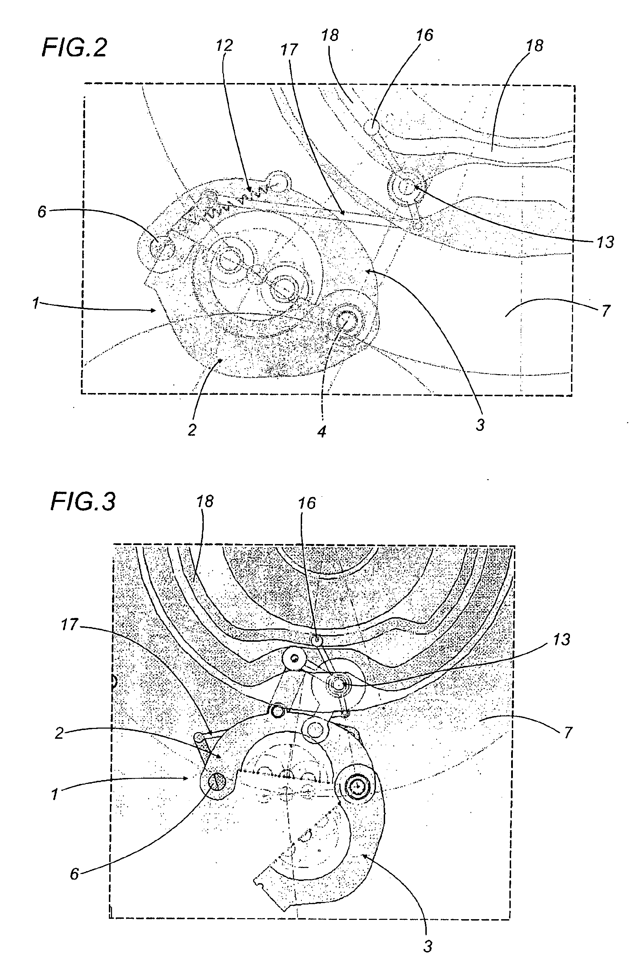

- Figure 2 is a schematic plan view of the mould of Figure 1, associated with a blow-moulding machine, with the half-moulds in the closed position;
- Figure 3 illustrates the mould of Figure 2 with the half-moulds in the open position;

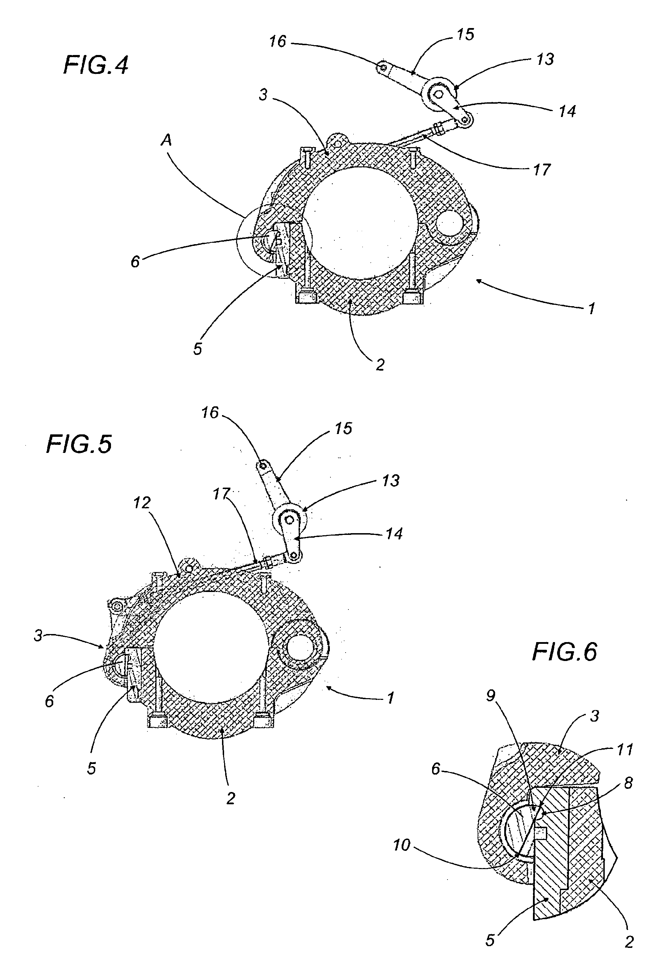

- Figure 4 is a plan view showing the mould of Figure 1 with the second fastening element in the locked position;
- Figure 5 illustrates the mould of Figure 4 with the second fastening element in the unlocked position;
- Figure 6 illustrates an enlargement of the detail A from Figure 4.

The numeral 1 in the accompanying drawings denotes a blow mould for making containers, in particular of plastic, from parisons (not illustrated, of known type).

The mould 1 comprises a first half-mould 2 and a second half-mould 3 hinged to rotate about a longitudinal axis 4 between an open position and a closed position.

The longitudinal axis 4 of relative rotation between the two half-moulds 2 and 3 is preferably vertical.

The mould 1 also comprises a first fastening element 5 fixed to the first half-mould 2 and a second fastening element 6 associated with the second half-mould 3.

The second fastening element 6 is rotatably coupled to the second half-mould 3 to rotate between a half-moulds locked position where it prevents the half-moulds from rotating relative to each other, and an unlocked position where the half-moulds are free to turn from the closed position to the open position.

Thus, the first and second fastening elements 5 and 6 constitute a locking system for the two half-moulds 2 and 3.

Preferably, the second fastening element 6 is rotatably coupled to the second half-mould 3 to turn about an axis parallel to the longitudinal axis 4; this simplifies the locking system. Alternatively, the second fastening element 6 might be coupled to the second half-mould 3 to rotate about an axis at an angle to the longitudinal axis 4.

In the locked position, the second fastening element 6 abuts the first fastening element 5 to form a connection against the forces generated by the fluid under pressure on the half-moulds 2 and 3, said forces being forces that move the half-moulds apart.

The mould 1 is designed to be associated with a filling machine comprising a carousel 7 (only partly illustrated in the drawings) and a plurality of the moulds 1.

Preferably, the carousel 7 rotates about a vertical axis.

It should be noted that in this invention, the relation between the rotation directions of the second fastening element 6, of the half-moulds 2 and 3 and of the carousel 7 is important; the rotation directions as such, however, are totally arbitrary.

In the light of this, this specification and the drawings refer to a carousel 7 that rotates in anticlockwise direction, but it will be understood that the carousel 7 and, likewise, the second fastening element 6 and the half-moulds 2 and 3 might also rotate in the other direction.

In this sense, any absolute reference to clockwise or anticlockwise rotation must be considered purely as a non-limiting example.

The second fastening element 6 comprises a protrusion 9 positioned behind the axis of rotation of the second fastening element 6 relative to the free end of the second half-mould 3. Thus, the axis of rotation of the second fastening element 6 is at an intermediate position between the protrusion 9 and the free end of the second half-mould 3.

In the locked position, the protrusion 9 is operatively inserted in an indentation 8 made in the first fastening element 5.

Preferably, the half-moulds 2, 3 are shaped in such a way that, in the closed position, the second fastening element 6 is positioned outside the first fastening element 5.

Thus the second fastening element 6 can turn between the unlocked position and the locked position in a rotation direction concordant with the rotation direction of the first half-mould 2 (about the longitudinal axis 4) from the open to the closed position.

Otherwise, if the half-moulds 2 and 3 were shaped in such a way that the second fastening element 6 was inside the first fastening element 5, with the half-moulds in the closed position, the rotation direction of the second fastening element 6 would be reversed, that is to say, it would be opposite to that of the first half-mould 2 (about the longitudinal axis 4) from the open to the closed position.

The first fastening element 5 has an indentation 8 made in it.

The second fastening element 6 comprises a protrusion 9 which, when the second fastening element 6 is in the locked position, is operatively inserted in the indentation 8 made in the first fastening element 5.

Preferably, the second fastening element 6 comprises a rod-shaped element; the protrusion 9 extends in a plane passing through the axis of rotation of said rod-shaped element to substantially define a wedge.

The element 9 comprises a rod-shaped element whose cross section is a circle portion delimited by a circular arc and a chord. Preferably, the chord is approximately equal to the diameter of the circle.

Thus, in the embodiment illustrated, the second fastening element 6 has an outside surface delimited by a curved face (consisting of a portion of a cylindrical surface) and a flat face. These faces form a first corner 10 facing the free (unhinged) end of the second half-mould 3 and a second corner 11 on the side opposite the free end of the second half-mould 3.

Thus, in the embodiment illustrated, the protrusion 9 consists of the portion of the fastening element 6 delimited by the end portions of the faces at the second corner 11.

It should be noted that the indentation 8 is considerably smaller in size (approximately 30%) than the second fastening element 6; in particular, the indentation 8 is substantially the same size as the protrusion 9.

Preferably, the protrusion 9 on the second fastening element 6 is shaped to form a contact surface for the indentation 8 and is positioned in a plane that is substantially radial with respect to the longitudinal axis of rotation 4 of the half-moulds (that is, a curved surface with small transversal dimensions and hence a substantially flat surface).

In the embodiment illustrated, the contact surface is a longitudinally elongated strip.

Further, the wall of the indentation 8 interacts with the second fastening element 6 to form the stop and is positioned substantially radially with respect to the axis of rotation (the wall is flat or curved with small transversal dimensions and, hence, substantially flat).

Preferably, the indentation 8 is a longitudinal groove in the first fastening element 5.

The mould 1 comprises an elastic element 12 connected to the second half-mould 3 and to the second fastening element 6 to move and normally keep the second fastening element 6 in the locked position.

In the light of this, it should be noted that, preferably, the first fastening element 5 has one outward facing end adapted to interact with the protrusion 9 on the second fastening element 6 when the mould is being closed, just before the two half-moulds move into the closed position.

In practice, when the two half-moulds are closed, the protrusion 9 on the second fastening element 6 first faces the outward facing portion of the first fastening element 5 which interacts with the protrusion 9 to move it to the retracted, released position and then faces the indentation 8 to enable the protrusion 9 (under the action of the elastic element 12) to move to the extracted, locked position, where it is inserted into the indentation 8.

The mould 1 further comprises a rocker 13 kinematically connected to the second fastening element 6 to rotate it from the locked to the unlocked position.

Preferably, the rocker 13 has a longitudinal pivot axis parallel to the axis of rotation of the second fastening element 6.

The rocker 13 preferably also comprises a first arm 14 kinematically connected to the elastic element and a second arm 15 equipped with a tappet 16.

In the embodiment illustrated, the rocker 13 has a pivot axis that is separate from the axis of rotation of the second fastening element 6 and is connected to the second fastening element 6 by a rod 17.

The rocker 13 (together with the rod 17 and the tappet 16 adapted to interact with a cam 18 associated with the carousel 7) therefore constitutes actuating means for moving the second fastening element 6 from the locked position to the unlocked position against the action of the elastic element 12.

The invention therefore also provides a blow-moulding machine comprising the carousel 7 and a plurality of moulds 1 associated with the carousel 7.

Preferably, the moulds 1 are associated with the carousel 7 in such a way that the half-moulds 2 and 3 form a closing plane that is tangential to the (circular) path followed by the half-moulds moving as one with the carousel.

Preferably, the moulds 1 are associated with the carousel 7 in such a way that (that is, the carousel 7 is rotated in such a way that) the axis of rotation 4 of the half-moulds (that is, the zone where the half-moulds are hinged) precedes the second fastening element 6 (that is, the free ends of the half-moulds) in the direction of movement of the carousel 7.

This makes it easier to extract the blow-moulded containers.

Furthermore, the first half-mould 2 is preferably positioned on the outside relative to the axis of rotation of the carousel 7, while the second half-mould 3 is positioned on the inside.

In the embodiment illustrated, the carousel 7 rotates anticlockwise, the first half-mould 2 rotates anticlockwise to the open position and the second fastening element 6 rotates from the locked to the unlocked position in anticlockwise direction. Thus, the second fastening element 6 rotates from the unlocked to the locked position in clockwise direction concordant with the rotation direction of the first half-mould 2 from the open to the closed position.

It should be noted that the rotation direction of the second fastening element 6 would be reversed if the half-moulds 2 and 3 were shaped in such a way that the second fastening element 6 was inside the first fastening element 5, with the half-moulds in the closed position.

The process for blow-moulding containers comprises the following steps:
- preparing a first and a second half-mould 2 and 3 hinged to rotate about a longitudinal axis between an open position and a closed position;
- preparing a first fastening element 5 fixed to the first half-mould 2;
- preparing a second fastening element 6 associated with the second half-mould 3 to rotate (preferably about an axis parallel with the longitudinal axis 4) between position where the two half-moulds are locked and it abuts the first fastening element 5, and a position where the two half-moulds are unlocked;
- placing a parison between the half-moulds 2 and 3 and turning the half-moulds in respective rotation directions to close them;
- locking the two half-moulds 2 and 3 to prevent the mould 1 from opening;
- feeding a fluid under pressure into the mould in order to blow-mould the parison;
- unlocking the half-moulds 2 and 3 to allow the mould to be opened and the blow-moulded container to be extracted.

Locking the two half-moulds comprises turning a protrusion 9 on the second fastening element 6 designed to be inserted in an indentation 8 made in the first fastening element 5, said protrusion 9 being positioned behind the axis of rotation of the second fastening element 6 relative to the free end of the second half-mould 3.

Preferably, the half-moulds 2, 3 are shaped in such a way that, in the closed position, the second fastening element 6 is positioned outside the first fastening element 5.

In that case locking the two half-moulds 2, 3 comprises turning the second fastening element 6 in a rotation direction concordant with the direction in which the first half-mould 2 is closed.

Preferably, the process also comprises a step of preparing an elastic element 12 connected to the second half-mould 3 and to the second fastening element 6 to move and normally keep the second fastening element 6 (that is, the protrusion 9) in the locked position.

In the light of this, the unlocking step comprises turning the second fastening element 6 in the rotation direction in which the first half-mould 2 is opened, against the action of the elastic element 12.

Preferably, the protrusion 9 on the second fastening element 6 is shaped to form a contact surface for the indentation 8 and is positioned in a plane that is substantially radial with respect to the longitudinal axis of rotation 4 of the half-moulds 2 and 3 when the second fastening element 6 is in the locked positon.

## Claims

1. A blow mould (1) for making plastic containers from respective parisons, comprising:
- a first and a second half-mould (2, 3) hinged to rotate about a longitudinal axis (4) between an open position and a closed position;
- a first fastening element (5) fixed to the first half-mould (2);
- a second fastening element (6) associated with the second half-mould (3) to rotate about an axis parallel with the longitudinal axis (4) between a position where the half-moulds (2, 3) are locked and it abuts the first fastening element (5), and a position where the half-moulds are unlocked,
wherein the second fastening element (6) comprises a protrusion (9) which, in the locked position, is operatively inserted in an indentation (8) made in the first fastening element (5),
the mould being **characterized in that** said protrusion (9), in the locked position, is positioned behind the axis of rotation of the second fastening element (6) relative to a free end of the second half-mould (3), wherein the second fastening element (6) comprises a rod-shaped element whose cross section is a circle portion delimited by a circular arc and a chord.

2. The mould according to claim 1, wherein the half-moulds (2, 3) are shaped in such a way that, in the closed position, the second fastening element (6) is positioned outside the first fastening element (5), and wherein the second fastening element (6) can turn between the unlocked position and the locked position in a rotation direction concordant with the rotation direction of the first half-mould (2) from the open to the closed position.

3. The mould according to claim 1 or 2, comprising an elastic element (12) connected to the second fastening element (6) to move and normally keep it in the locked position.

4. The mould according to any of the foregoing claims, wherein the protrusion (9) on the second fastening element (6) is shaped in such a way as to afford a contact surface for abutting against the indentation (8) and positioned in a plane that is substantially radial with respect to the longitudinal axis of rotation (4) of the two half-moulds (2, 3).

5. The mould according to any of the foregoing claims, wherein a wall of the indentation (8) interacting with the second fastening element (6) to form the stop is positioned substantially radially with respect to the axis of rotation.

6. The mould according to any of the foregoing claims from 3 to 5, comprising actuating means for moving the second fastening element (6) from the locked position to the unlocked position against the action of the elastic element.

7. The mould according to claim 6, wherein the actuating means comprise a rocker (13) kinematically connected to the second fastening element (6) to rotate it from the locked to the unlocked position.

8. The mould according to claim 7, wherein the rocker (13) has a longitudinal pivot axis parallel to the axis of rotation of the second fastening element (6).

9. The mould according to claim 7 or 8, wherein the rocker (13) comprises a first arm (14) kinematically connected to the second fastening element (6) and a second arm (15) equipped with a tappet (16).

10. The mould according to claim 8 or 9, wherein the rocker (13) has a pivot axis that is separate from the axis of rotation of the second fastening element (6) and is connected to the second fastening element through a mechanism comprising a rod (17).

11. A blow-moulding machine comprising a carousel (7) and a plurality of moulds associated with the carousel (7),
**characterized in that** the moulds are moulds (1) according to any of the foregoing claims.

12. A blow-moulding process for making plastic containers from respective parisons in a mould (1), comprising the following steps:
- preparing a first and a second half-mould (2, 3) hinged to rotate about a longitudinal axis (4) between an open position and a closed position;
- preparing a first fastening element (5) fixed to the first half-mould (2);
- preparing a second fastening element (6) associated with the second half-mould (3) to rotate about an axis parallel with the longitudinal axis (4) between a position where the two half-moulds (2, 3) are locked and it abuts the first fastening element (5), and a position where the half-moulds are unlocked;
- placing a parison between the half-moulds (2, 3) and turning the half-moulds in respective rotation directions to close them;
- locking the two half-moulds (2, 3) to prevent the mould from opening;
- feeding a fluid under pressure into the mould in order to blow-mould the parison;
- unlocking the half-moulds to allow the mould to be opened and to extract the blow-moulded container;
- locking the two half-moulds (2, 3) by turning a protrusion (9) formed on the second fastening element (6) and operatively inserted in an indentation (8) made in the first fastening element (5),
the process being **characterized in that** said protrusion (9), in the locked position, is positioned behind the axis of rotation of the second fastening element (6) relative to a free end of the second half-mould (3), wherein the second fastening element (6) comprises a rod-shaped element whose cross section is a circle portion delimited by a circular arc and a chord.

13. The process according to claim 12, wherein locking the two half-moulds (2, 3) comprises turning the second fastening element (6) in a rotation direction concordant with the direction in which the first half-mould (2) is closed, the half-moulds (2, 3) being shaped in such a way that, in the closed position, the second fastening element (6) is positioned outside the first fastening element (5).

14. The process according to claim 12, comprising a step of preparing an elastic element (12) connected to the second fastening element (6) to move and normally keep it in the locked position.

15. The process according to claims 12 or 13, wherein the protrusion (9) on the second fastening element (6) is shaped in such a way as to afford a contact surface for abutting against the indentation (8) and positioned in a plane that is substantially radial with respect to the longitudinal axis of rotation (4) of the two half-moulds when the second fastening element (6) is in the locked position.

## Patentansprüche

1. Blasform (1) zur Herstellung von Kunststoffbehältern aus entsprechenden Vorformlingen, umfassend:
- eine erste und eine zweite Formhälfte (2, 3), die gelenkig verbunden sind, um sich um eine Längsachse (4) zwischen einer offenen Position und einer geschlossenen Position zu drehen;
- ein erstes Befestigungselement (5), das an der ersten Formhälfte (2) fixiert ist;
- ein zweites Befestigungselement (6), das an die zweite Formhälfte (3) anschließt, um sich um eine Achse, die parallel zur Längsachse (4) ist, zwischen einer Position, in der die Formhälften (2, 3) verriegelt sind und es am ersten Befestigungselement (5) anliegt, und einer Position, in der die Formhälften entriegelt sind, zu drehen,
wobei das zweite Befestigungselement (6) einen Vorsprung (9) umfasst, der in der verriegelten Position betriebswirksam in eine Vertiefung (8) eingeführt ist, die im ersten Befestigungselement (5) ausgebildet ist, wobei das Formwerkzeug **dadurch gekennzeichnet** ist, dass der Vorsprung (9) in der verriegelten Position hinter der Drehachse des zweiten Befestigungselements (6) relativ zu einem freien Ende der zweiten Formhälfte (3) positioniert ist, wobei das zweite Befestigungselement (6) ein stabförmiges Element umfasst, dessen Querschnitt ein Kreisabschnitt ist, der von einem Kreisbogen und einer Kreissehne begrenzt wird.

2. Formwerkzeug nach Anspruch 1, wobei die Formhälften (2, 3) so geformt sind, dass das zweite Befestigungselement (6) in der geschlossenen Position außerhalb des ersten Befestigungselements (5) positioniert ist und wobei das zweite Befestigungselement (6) zwischen der entriegelten Position und der verriegelten Position in einer Drehrichtung, die der Drehrichtung der ersten Formhälfte (2) entspricht, von der offenen in die geschlossene Position rotierbar ist.

3. Formwerkzeug nach Anspruch 1 oder 2, umfassend ein elastisches Element (12), das mit dem zweiten Befestigungselement (6) verbunden ist, um es zu bewegen und normalerweise in der verriegelten Position zu halten.

4. Formwerkzeug nach einem der vorangehenden Ansprüche, wobei der Vorsprung (9) am zweiten Befestigungselement (6) so geformt ist, dass eine Kontaktoberfläche zum Anliegen an der Vertiefung (8) gebildet wird und er in einer Ebene positioniert ist, die im Wesentlichen in Bezug auf die Längsdrehachse (4) der zwei Formhälften (2, 3) radial ist.

5. Formwerkzeug nach einem der vorangehenden Ansprüche, wobei eine Wand der Vertiefung (8), die mit dem zweiten Befestigungselement (6) interagiert, um den Anschlag zu bilden, im Wesentlichen in Bezug auf die Drehachse radial positioniert ist.

6. Formwerkzeug nach einem der vorangehenden Ansprüche 3 bis 5, umfassend ein Betätigungsmittel zum Bewegen des zweiten Befestigungselements (6) von der verriegelten Position in die entriegelte Position entgegen der Wirkung des elastischen Elements.

7. Formwerkzeug nach Anspruch 6, wobei das Betätigungsmittel einen Kipphebel (13) umfasst, der kinematisch mit dem zweiten Befestigungselement (6) verbunden ist, um es von der verriegelten Position in die entriegelte Position zu drehen.

8. Formwerkzeug nach Anspruch 7, wobei der Kipphebel (13) eine Längsschwenkachse aufweist, die parallel zur Drehachse des zweiten Befestigungselements (6) ist.

9. Formwerkzeug nach Anspruch 7 oder 8, wobei der Kipphebel (13) einen ersten Arm (14), der kinematisch mit dem zweiten Befestigungselement (6) verbunden ist, und einen zweiten Arm (15), der mit einem Stößel (16) ausgestattet ist, umfasst.

10. Formwerkzeug nach Anspruch 8 oder 9, wobei der Kipphebel (13) eine Schwenkachse aufweist, die von der Drehachse des zweiten Befestigungselements (6) getrennt ist und mit dem zweiten Befestigungselement durch einen Mechanismus verbunden ist, der einen Stab (17) umfasst.

11. Blasformmaschine, umfassend ein Karussell (7) und eine Vielzahl von an das Karussell (7) angeschlossenen Formwerkzeugen,
**dadurch gekennzeichnet, dass** die Formwerkzeuge Formwerkzeuge (1) nach einem der vorangehenden Ansprüche sind.

12. Blasformprozess zur Herstellung von Kunststoffbehältern aus entsprechenden Vorformlingen in einem Formwerkzeug (1), umfassend die folgenden Schritte:
- Anordnen einer ersten und einer zweiten Formhälfte (2, 3), die gelenkig verbunden sind, um sich um eine Längsachse (4) zwischen einer offenen Position und einer geschlossenen Position zu drehen;
- Anordnen eines ersten Befestigungselements (5), das an der ersten Formhälfte (2) fixiert ist;
- Anordnen eines zweiten Befestigungselements (6), das an die zweite Formhälfte (3) anschließt, um sich um eine Achse, die parallel zur Längsachse (4) ist, zwischen einer Position, in der die zwei Formhälften (2, 3) verriegelt sind und es am ersten Befestigungselement (5) anliegt, und einer Position, in der die Formhälften entriegelt sind, zu drehen;
- Platzieren eines Vorformlings zwischen den Formhälften (2, 3) und rotieren der Formhälften in entsprechende Drehrichtungen, um sie zu schließen;
- Verriegeln der zwei Formhälften (2, 3), um zu verhindern, dass sich das Formwerkzeug öffnet;
- Zuführen eines druckbeaufschlagten Fluids in das Formwerkzeug zum Blasformen des Vorformlings;
- Entriegeln der Formhälften, um zu gestatten, dass sich das Formwerkzeug öffnet und der blasgeformte Behälter herausgenommen wird;
- Verriegeln der zwei Formhälften (2, 3) durch Rotieren eines Vorsprungs (9), der am zweiten Befestigungselement (6) ausgeformt ist und betriebswirksam in eine Vertiefung (8) eingeführt ist, die im ersten Befestigungselement (5) ausgebildet ist, wobei der Prozess **dadurch gekennzeichnet** ist, dass der Vorsprung (9) in der verriegelten Position hinter der Drehachse des zweiten Befestigungselements (6) relativ zu einem freien Ende der zweiten Formhälfte (3) positioniert ist, wobei das zweite Befestigungselement (6) ein stabförmiges Element umfasst, dessen Querschnitt ein Kreisabschnitt ist, der von einem Kreisbogen und einer Kreissehne begrenzt wird.

13. Prozess nach Anspruch 12, wobei das Verriegeln der zwei Formhälften (2, 3) das Rotieren des zweiten Befestigungselements (6) in einer Drehrichtung, die der Richtung entspricht, in der die erste Formhälfte (2) geschlossen wird, umfasst, wobei die Formhälften (2, 3) so geformt sind, dass das zweite Befestigungselement (6) in der geschlossenen Position außerhalb des ersten Befestigungselements (5) positioniert ist.

14. Prozess nach Anspruch 12, umfassend einen Schritt des Anordnens eines elastischen Elements (12), das mit dem zweiten Befestigungselement (6) verbunden ist, um es zu bewegen und normalerweise in der verriegelten Position zu halten.

15. Prozess nach den Ansprüchen 12 oder 13, wobei der Vorsprung (9) am zweiten Befestigungselement (6) so geformt ist, dass eine Kontaktoberfläche zum Anliegen an der Vertiefung (8) gebildet wird und er in einer Ebene positioniert ist, die im Wesentlichen in Bezug auf die Längsdrehachse (4) der zwei Formhälften radial ist, wenn das zweite Befestigungselement (6) in der verriegelten Position ist.

## Revendications

1. Moule de soufflage (1) destiné à la fabrication de récipients en plastique à partir d'ébauches respectives, comprenant :
- un premier et un second demi moule (2, 3) montés pivotant pour tourner autour d'un axe longitudinal (4) entre une position d'ouverture et une position de fermeture ;
- un premier élément de fixation (5) fixé au premier demi moule (2) ;
- un second élément de fixation (6) associé au second demi moule (3) pour tourner autour d'un axe parallèle à l'axe longitudinal (4) entre une position où les demi moules (2, 3) sont verrouillés et où il se met en butée contre le premier élément de fixation (5), et une position où les demi moules sont déverrouillés,
dans lequel le second élément de fixation (6) comprend une saillie (9) qui, dans la position de verrouillage, est fonctionnellement insérée dans une indentation (8) réalisée dans le premier élément de fixation (5),
le moule étant **caractérisé en ce que** ladite saillie (9), dans la position de verrouillage, est positionnée derrière l'axe de rotation du second élément de fixation (6) par rapport à une extrémité libre du second demi moule (3), dans lequel le second élément de fixation (6) comprend un élément en forme de tige dont la section transversale est une partie circulaire délimitée par un arc circulaire et une corde.

2. Moule selon la revendication 1, dans lequel les demi moules (2, 3) présente une forme telle que, dans la position de fermeture, le second élément de fixation (6) est positionné hors du premier élément de fixation (5) et dans lequel le second élément de fixation (6) peut tourner entre la position de déverrouillage et la position de verrouillage dans un sens de rotation concordant avec le sens de rotation du premier demi moule (2), de la position d'ouverture à celle de fermeture.

3. Moule selon les revendications 1 ou 2, comprenant un élément élastique (12) relié au second élément de fixation (6) pour le déplacer et le maintenir dans la position de verrouillage.

4. Moule selon l'une quelconque des revendications précédentes, dans lequel la saillie (9) sur le second élément de fixation (6) a une forme permettant de réaliser une surface de contact pour se mettre en butée contre l'indentation (8) et positionnée dans un plan étant substantiellement radial par rapport à l'axe longitudinal de rotation (4) des deux demi moules (2, 3) .

5. Moule selon l'une quelconque des revendications précédentes, dans lequel une cloison de l'indentation (8), interagissant avec le second élément de fixation (6) pour former la butée, est positionnée substantiellement de façon radiale par rapport à l'axe de rotation.

6. Moule selon l'une quelconque des revendications de 3 à 5, comprenant des moyens d'actionnement servant à déplacer le second élément de fixation (6) de la position de verrouillage à la position de déverrouillage sous l'action de l'élément élastique.

7. Moule selon la revendication 6, dans lequel les moyens d'actionnement comprennent un balancier (13) cinétiquement relié au second élément de fixation (6) pour le faire tourner de la position de verrouillage à celle de déverrouillage.

8. Moule selon la revendication 7, dans lequel le balancier (13) possède un axe de pivotement longitudinal parallèle à l'axe de rotation du second élément de fixation (6).

9. Moule selon les revendications 7 ou 8, dans lequel le balancier (13) comprend un premier bras (14) relié cinématiquement au second élément de fixation (6) et un deuxième bras (15) équipé d'un poussoir (16).

10. Moule selon les revendications 8 ou 9, dans lequel le balancier (13) possède un axe de pivotement étant séparé de l'axe de rotation du second élément de fixation (6) et est relié au second élément de fixation par le biais d'un mécanisme comprenant une tige (17).

11. Machine à mouler par soufflage comprenant un carrousel (7) et une pluralité de moules associés au carrousel (7), **caractérisée en ce que** les moules sont des moules (1) selon l'une quelconque des revendications précédentes.

12. Procédé de moulage par soufflage destiné à la fabrication de récipients en plastique à partir d'ébauches respectives dans un moule (1), comprenant les étapes suivantes :
- préparer un premier et un second demi moule (2, 3) montés pivotant pour tourner autour d'un axe longitudinal (4) entre une position d'ouverture et une position de fermeture ;
- préparer un premier élément de fixation (5) fixé au premier demi moule (2) ;
- préparer un second élément de fixation (6) associé au second demi moule (3) pour tourner autour d'un axe parallèle à l'axe longitudinal (4) entre une position où les deux demi moules (2, 3) sont verrouillés et où il se met en butée contre le premier élément de fixation (5), et une position où les demi moules sont déverrouillés ;
- placer une ébauche entre les demi moules (2, 3) et faire tourner les demi moules dans des sens de rotation respectifs pour les fermer ;
- verrouiller les deux demi moules (2, 3) pour empêcher l'ouverture du moule ;
- introduire un fluide sous pression dans le moule afin de mouler par soufflage l'ébauche ;
- déverrouiller les demi moules pour permettre au moule de s'ouvrir et pour extraire le récipient moulé par soufflage ;
- verrouiller les deux demi moules (2, 3) en tournant une saillie (9) formée sur le second élément de fixation (6) et fonctionnellement insérée dans une indentation (8) faite dans le premier élément de fixation (5),
le procédé étant **caractérisé en ce que** ladite saillie (9), dans la position de verrouillage, est positionnée derrière l'axe de rotation du second élément de fixation (6) par rapport à une extrémité libre du second demi moule (3), dans lequel le second élément de fixation (6) comprend un élément en forme de tige dont la section transversale est une partie circulaire délimitée par un arc circulaire et une corde.

13. Procédé selon la revendication 12, dans lequel le verrouillage des deux demi moules (2, 3) comprend la rotation du second élément de fixation (6) dans un sens de rotation concordant avec la direction dans laquelle le premier demi moule (2) se ferme, les demi moules (2, 3) ayant une forme telle que, dans la position de fermeture, le second élément de fixation (6) est positionné en dehors du premier élément de fixation (5) .

14. Procédé selon la revendication 12, comprenant une étape consistant à préparer un élément élastique (12) relié au second élément de fixation (6) pour le déplacer et le maintenir dans la position de verrouillage.

15. Procédé selon les revendications 12 ou 13, dans lequel la saillie (9) sur le second élément de fixation (6) a une forme permettant de réaliser une surface de contact pour se mettre en butée contre l'indentation (8) et positionnée dans un plan étant substantiellement radial par rapport à l'axe longitudinal de rotation (4) des deux demi moules lorsque le second élément de fixation (6) se trouve dans la position de verrouillage.
